# EUROPEAN PATENT SPECIFICATION

(11) **EP 3 409 862 B1**
(45) Date of publication and mention of the grant of the patent: **08.04.2020**
(21) Application number: 17173484.1
(22) Date of filing: 30.05.2017
(51) Int. Cl.: F24S 20/67, F24S 25/35, F24S 25/37, E04D 3/08, H02S 20/23

(54) **AN ASSEMBLY ADAPTED TO SUPPORT PANELS**
ZUR STÜTZUNG VON PANEELEN ANGEPASSTE ANORDNUNG
ENSEMBLE CONÇU POUR SUPPORTER DES PANNEAUX

(43) Date of publication of application: 05.12.2018
(73) Proprietor: Voestalpine Sadef NV, 8830 Hooglede (BE)
(72) Inventor: Depauw, Marc, 8610 Kortemark (BE); Roose, Marc, 8400 Oostende (BE); Vandensteendam, Bjorn, 8750 Zwevezele (BE)
(74) Representative: IP HILLS NV

(56) References cited:
- EP-A1- 0 345 238
- EP-A1- 2 615 390
- WO-A1-99/10609
- WO-A1-2015/144601
- DE-U1-202010 005 492
- FR-A1- 2 959 800

## Description

### Field of the Invention

The present invention generally relates to an assembly for supporting panels arranged in a plurality of rows arranged side by side, by means of suitable profiles. More particularly it relates to an assembly for supporting frame-less photo-voltaic panels, glass panels, and the like.

### Background of the invention

A prior art system for mounting photo-voltaic panels is for example known from WO2015/144601. There is however a desire to make use of such an assembly for supporting frame-less photo-voltaic panels as this leads to a reduction in transport volume and weight, as well as overall weight of the mounted assembly. However, these frame-less photo-voltaic panels lack sufficient structural rigidity to span the distance between two longitudinal profiles of the assembly without exhibiting unallowable bending.

Therefor there is a need for an improved assembly which provides for an efficient and safe mounting of the assembly, while providing for sufficient structural support for use with frame-less photo-voltaic panels, glass panels, or the like.

Other assemblies adapted to support panels are disclosed in EP 0 345 238 A1, DE 20 2010 005492 U1, EP 2 615 390 A1, WO 99/10609 A1 and FR 2 959 800 A1.

### Summary

According to a first aspect of the invention there is provided an assembly adapted to support panels, arranged in a plurality of rows arranged side by side,
said rows each extending from a lower end to a higher end along a longitudinal direction inclined with respect to a horizontal plane,
each row comprising:
- two longitudinal profiles extending from said lower end to said higher end along said longitudinal direction and sideways bordering said row;
- a plurality of transverse profiles extending between said two longitudinal profiles along a transverse direction transverse to said longitudinal direction,
- when mounted, a plurality of said panels, arranged sequentially along said longitudinal direction, and supported:
   - between said two longitudinal profiles at both opposing longitudinal panel edges extending along said longitudinal direction, and
   - between two of said transverse profiles at both opposing transverse panel edges extending along said transverse direction, and
wherein:
- said longitudinal profiles comprise a panel support structure at each side facing an adjacent longitudinal profile, said panel support structure comprising a U shaped cross section comprising a vertical base and legs extending in the direction of an adjacent longitudinal profile;
- said panel support structures are configured such that said panels can only be added to said row by sliding said panels along the longitudinal direction with both opposing longitudinal panel edges respectively enclosed by the corresponding panel support structures of the two longitudinal profiles bordering said row; and
- said transverse profiles comprise a panel support structure at each side facing an adjacent transverse profile, said panel support structure comprising a U shaped cross section comprising a vertical base and legs extending in the direction of an adjacent transverse profile;
CHARACTERISED IN THAT
- said longitudinal profiles further comprise a profile support structure arranged below each panel support structure, said profile support structure comprising a U shaped cross section comprising a vertical base and legs extending in the direction of an adjacent longitudinal profile; and
- said transverse profiles comprise, extending at both opposing ends, respective extensions configured to be respectively enclosed by said profile support structures of said two adjacent longitudinal profiles such that said transverse profiles can be added to said row by sliding together with said panels along the longitudinal direction during mounting.

According to an embodiment there is provided an assembly, wherein said extensions of said transverse profiles are arranged at a position below said panel support structures of the transverse profiles, corresponding to the position of the profile support structures below the panel support structures of said longitudinal profiles.

According to a further embodiment there is provided an assembly, wherein:
- the distance between the corresponding legs of the respective facing panel support structures of two adjacent longitudinal supports is smaller than the size of the panels along the transverse direction when mounted;
- the distance between the vertical bases of the respective facing panel support structures of two adjacent longitudinal supports is larger than the size of the panels along the transverse direction when mounted;
- the distance between the corresponding legs of the respective facing panel support structures of two adjacent transverse supports is smaller than the size of the panels along the longitudinal direction when mounted;
- the distance between the vertical bases of the respective facing panel support structures of two adjacent transverse supports is larger than the size of the panels along the longitudinal direction when mounted;
- the length of the transverse profiles along the transverse direction, is larger at the height of the extensions, then at the height of the panel support structures of the transverse profile;
- the length of the transverse profiles along the transverse direction at the height of the panel support structures is smaller than the distance between the legs of the respective facing panel support structures of the adjacent longitudinal profiles in between which the transverse profiles are mounted; and/or
- the length of the transverse profiles along the transverse direction at the height of the extensions is larger than the distance between the legs of the respective facing profile support structures of the adjacent longitudinal profiles in between which the transverse profiles are mounted.

According to a further embodiment there is provided an assembly, wherein the legs of the profile support structure are inclined towards each other at an angle in the range of 2° to 20°.

According to a further embodiment there is provided an assembly, wherein during alternating, sequential, slidable insertion of said transverse profiles and said panels at the lower end of the row the assembly is configured to allow a newly inserted transverse profile and/or panel at the lower end to slide the previously inserted sequence of transverse profiles and/or panels freely along the longitudinal direction in the direction of the higher end.

According to a further embodiment there is provided an assembly, wherein, after insertion of the last transverse profile at the lower end of the row, this last transverse profile of the row is attached to the bordering longitudinal profiles of the row such that the entire sequence of transverse profiles and panels of the row is secured without the need for further mounting means.

According to a further embodiment there is provided an assembly, wherein the longitudinal profiles and the transverse profiles are profiles manufactured from a single sheet of metal.

According to a further embodiment there is provided an assembly, wherein the transverse profiles comprises an elastic element arranged in its panel support.

According to a further embodiment there is provided an assembly, wherein the elastic element comprises one or more of the following:
- a gasket;
- a rubber element;
- a plastic element;
- a rubber or plastic element co-extruded with the panel support of the transverse profile, when said transverse profile (50) is manufactured as one of the following:
   - an extruded plastic profile;
   - an extruded metal profile;
   - an extruded Aluminium profile.

According to a further embodiment there is provided an assembly, wherein:
- said longitudinal profiles are mirror symmetric with respect to vertical plane of symmetry along said longitudinal direction; and/or
- said transverse profiles are mirror symmetric with respect to a plane of symmetry transverse to said longitudinal direction.

According to a further embodiment there is provided an assembly, wherein said panel consists of one of the following:
- a glass panel
- a frame-less photo-voltaic panel
- a photo-voltaic panel.

According to another aspect of the invention there is provided a method of mounting an assembly according to the first aspect of the invention, characterized in that the method comprises the steps of:
- arranging said longitudinal profiles;
- for each of said rows bordered by two of said longitudinal profiles:
   - inserting at said lower end a first transverse profile;
   - inserting at said lower end a first panel thereby sliding said first transverse profile along the longitudinal direction towards the higer end;
   - inserting alternatingly a newly inserted transverse profile and a panel at the lower end, thereby sliding the previously inserted sequence of transverse profiles and/or panels freely along the longitudinal direction in the direction of the higher end.

According to an embodiment there is provided a method, wherein, the method comprises the further steps of:
- after insertion of the last transverse profile at the lower end of the row, attaching this last transverse profile of the row to the bordering longitudinal profiles of the row such that the entire sequence of transverse profiles and panels of the row is secured without the need for further mounting means.

In this way, several embodiments of an assembly and method for mounting this assembly are provided which allow for an efficient and safe mounting of such panels, while providing sufficient structural support.

### Brief description of the drawings

- Figure 1 shows a perspective view of an embodiment of an assembly for supporting frame-less photo-voltaic panels;
- Figure 2 shows a side view of the embodiment of Figure 1;
- Figure 3 shows a top view of the embodiment of Figure 1;
- Figures 4 and 5 show an embodiment of the longitudinal and transverse profiles of the assembly of Figure 1 in more detail;
- Figures 6 and 7 show dimensions of an exemplary embodiment of the longitudinal and transverse profiles of Figure 4 and 5;
- Figure 8 shows an alternative embodiment of a transverse profile;
- Figure 9 shows an alternative embodiment of an assembly similar to that of Figure 1; and
- Figure 10 schematically illustrates an embodiment of a method for mounting such an assembly.

### Detailed description

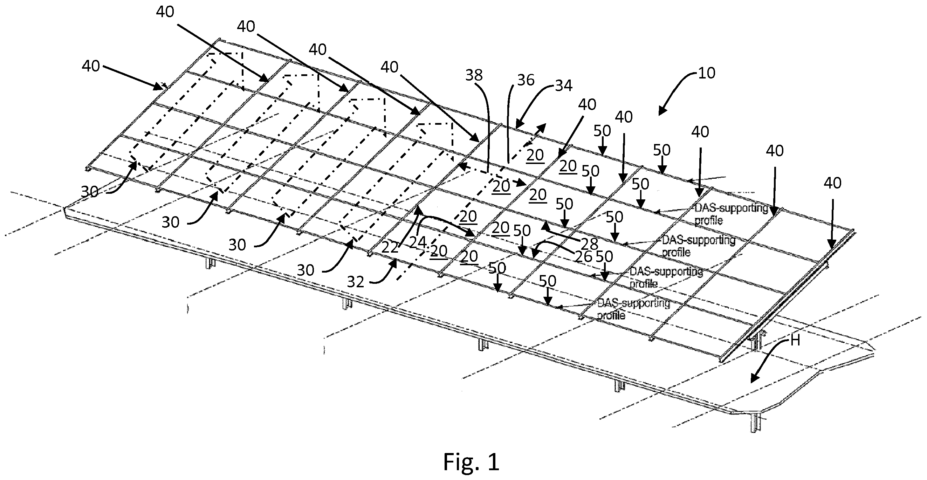

Figure 1 shows an embodiment of an assembly 10 adapted to support frame-less photo-voltaic panels 20. Such frame-less photo-voltaic or PV panels which do not comprise a surrounding frame structure comprise a thickness in the range of for example 3 to 8 mm, for example 4 or 5 mm. However, it is clear that alternative embodiments of the assembly 10 could be adapted to support other types of panels 20, such as for example glass panels, other types of PV panels, etc. as long as in general the panels 20 comprise a similar range of their thickness. As shown in Figure 1 the panels 20 supported by the assembly 10 are arranged in a plurality of rows 30. As shown each row 30 of the assembly of Figure 1 comprises a sequence of panels 20. However, it is clear that alternative embodiments are possible, in which a different plurality of panels 20 is arranged in each row 30, such as for example in the range of 5 to 15 or more. As further shown in Figure 1, these rows 30 are arranged side by side, this means one next to the other. According to the embodiment shown there are provided nine rows 30 that are arranged side by side. However, it is clear that, according to alternative embodiments, a different plurality of rows 30 could be arranged side by side, for example in the range of 3 to 20 or more.

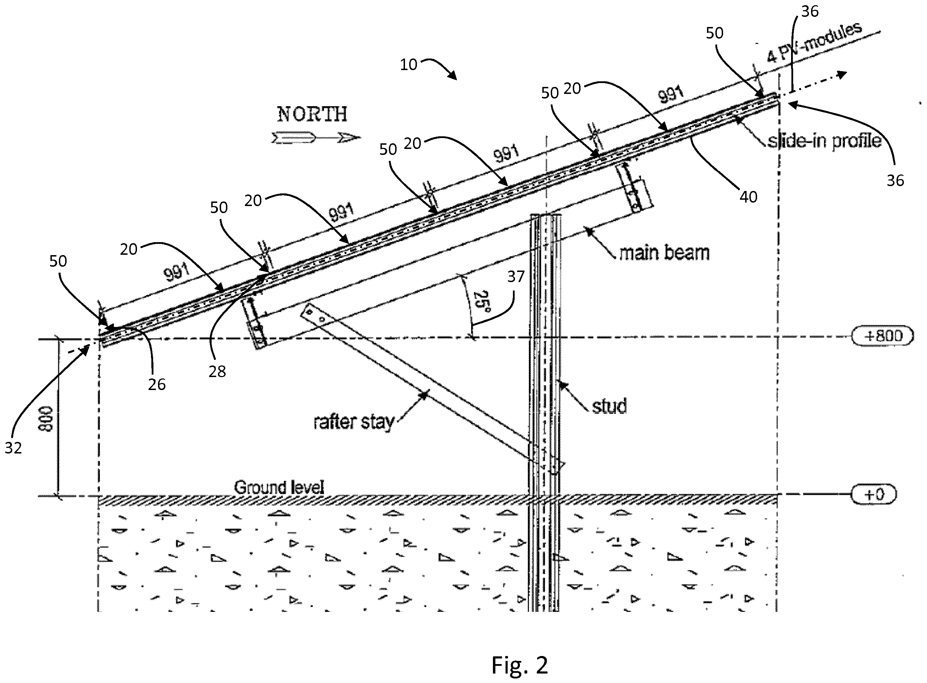

As further shown, each of the rows 30 extends from a lower end 32 to a higher end 34 along a longitudinal direction 36 inclined with respect to a horizontal plane H. As shown more clearly in the side view of Figure 2, the inclination 37 of the longitudinal direction 36 with respect to the horizontal plane H, according to this embodiment, is for example 25°. However, it is clear that, according to alternative embodiments, a different inclination 37 is possible, for example in the range of 5° to 60°. It is thus further also clear that the distance from the lower end 32 of the row 30 to the ground level is smaller than the distance from the higher end 34 of the row to the ground level, as shown. According to the embodiment shown the distance of the lower end 32 of the row 30 to ground level is 800mm. However according to alternative embodiments any suitable distance could be chosen, for example in the range of 0,5m to 2,5m or more.

According to the embodiment shown in Figure 2, the length of the row 30 along the longitudinal direction 36 is high enough to accommodate four PV panels with a size of 991mm along this longitudinal direction 36. However, it is clear that, according to alternative embodiments, panels 20 with different dimensions are possible, for example in the range of 0,5m to 1,5m, and that according to alternative embodiments the length of the row 30 could for example extend over 10m or more, for example in the range of 10m to 15m, allowing to support a row 30 of any desired plurality of panels 20.

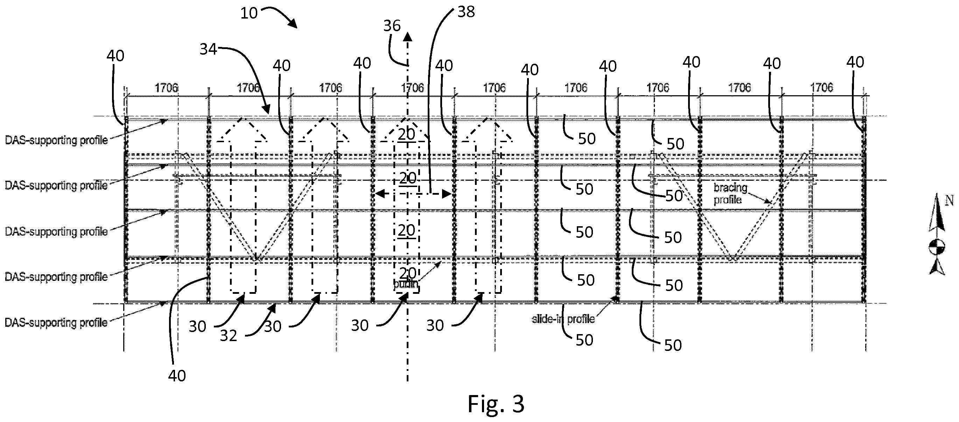

As further also shown in Figure 3, which shows a top view of the embodiment of Figures 1 and 2, each row 30 comprises two longitudinal profiles 40 extending from said lower end (32) to said higher end 34 along said longitudinal direction 36. These two longitudinal profiles 40 of each row 30 sideways border this row 30. According to the embodiment shown, this means that adjacent rows 30 share the same longitudinal profile 40 in between them, however it is clear that alternative embodiments are possible, in which each row 30 comprises two bordering longitudinal profiles 40 separate from the longitudinal profiles 40 of adjacent rows 30.

According to the embodiment shown in Figure 3, each row 30 comprises five transverse profiles 50 extending between the two longitudinal profiles 40 bordering this row 30. As shown, these transverse profiles 50 extend between the adjacent longitudinal profiles 40 of the row 30 along a transverse direction 38 transverse to the longitudinal direction 36. It is clear that according to alternative embodiments a different plurality of transverse profiles 50 are possible. The number of transverse profiles 50 typically is related to the number of panels 20 in a row 30, as a transverse profile 50 is arranged in between each panel 20 of a row and additionally a transverse profile 50 is arranged at the lower end 32 and at the higher end 34 of the row 30. In such a way, the number of transverse profiles 50 in each row 30 typically equals the number of panels 20 in each row 30 incremented by one. As further shown according to this embodiment the distance between each parallel, longitudinal profile 40 of the rows 30 is about 1706mm, and is related to the size of the panels 20 along the transverse direction 38 when mounted as will be explained in further detail below. It is however clear that alternative embodiments are possible in which the distance between the parallel longitudinal profiles 40 is different, for example in the range of 0,5m to 2m or more. However, the assembly 10 is particularly advantageous when the size of the panels 20 along the transverse direction 38 is larger than the size of the panels along the longitudinal direction 36, as the risk for unallowable bending of thin panels like frame-less PV panels or glass panels when only supported by the longitudinal profiles 40 is higher then.

It is thus clear that, as shown in Figures 1 to 3, when mounted, each row 30 the assembly 10 comprises a plurality of panels 20 arranged sequentially along the longitudinal direction 36. Each of these panels 20 is supported at all four of its panel edges 22, 24, 26, 28, thereby preventing unallowable bending in case of thin panels such as frame-less PV panels. This means that the panels 20 are supported between the two longitudinal profiles 40 bordering their row 30 at both opposing longitudinal panel edges 22, 24. These longitudinal panel edges 22, 24, as shown, are the panel edges that extend along the longitudinal direction 36, when mounted. As further shown, the panels 20 are also supported between two of the transverse profiles 50 of their row 30 at both opposing transverse panel edges 26, 28. These transverse panel edges 26, 28, as shown are the panel edges extending along the transverse direction 38, when mounted.

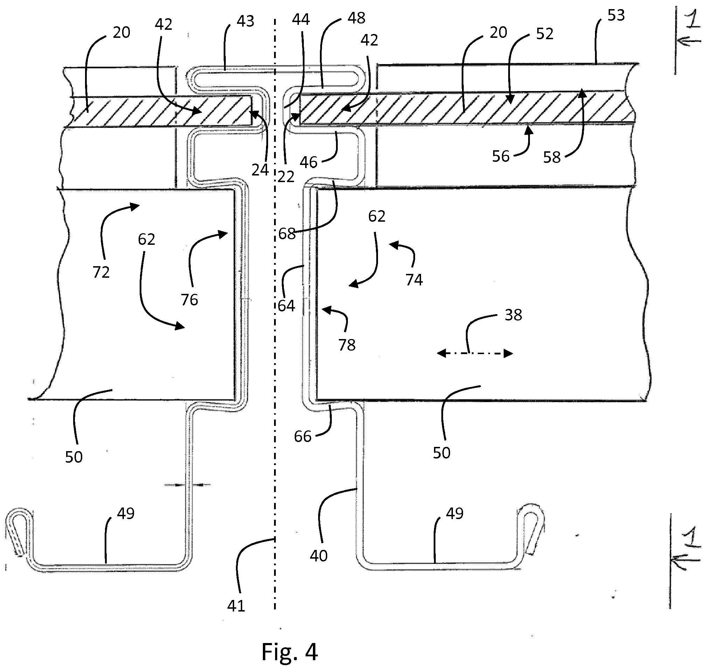

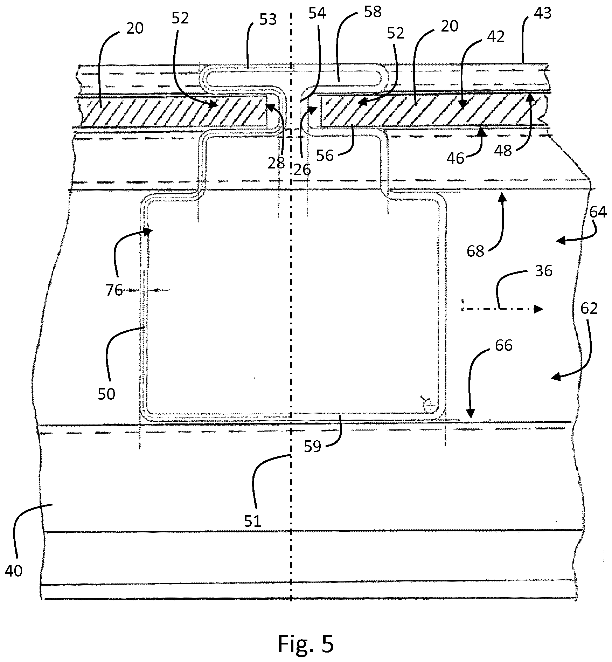

Figures 4 and 5 show an embodiment of the longitudinal and transverse profiles of the assembly of Figure 1 in more detail. Figure 4 shows a cross section of an embodiment of the longitudinal profile 40 along a plane transverse to the longitudinal direction 36. Figure 4 further shows the interaction of the longitudinal profile 40 with the ends of the transverse profiles 50 of both rows 30 which the longitudinal profile 40 borders. Figure 5 shows a view along lines 1-1 in Figure 4, this means a cross section of the transverse profile 50 along a plane transverse to the transverse direction 38, which further shows the interaction of their transverse profile 50 with the longitudinal profile 40 on which it is supported.

As shown most clearly in Figure 4, the longitudinal profiles 40 comprise a panel support structure 42 at each side facing an adjacent longitudinal profile 40. According to the embodiment shown in Figure 4, comprising a longitudinal profile 40 with a mirror symmetrical cross section with respect to a vertical plane of symmetry 41 extending along the longitudinal direction 36, this means that at both opposing sides of the plane of symmetry 41, the longitudinal profile 40 comprises such a panel support structure 42. In other words, the longitudinal profile 40 comprises two panel support structures 42, arranged at the same height and facing respectively both adjacent longitudinal profiles 40 of both rows 30 of panels 20 which this longitudinal profile 40 borders. As shown this panel support structure 42 comprising a U shaped cross section. The U shaped cross section of the panel support structure 42 comprises a vertical base 44 and legs 46, 48 extending in the direction of an adjacent longitudinal profile 40. The legs 46, 48, according to the embodiment shown thus extend in a direction away from the plane of symmetry 41. The upper leg 48 extends from the upper end of the vertical base 44, and the lower leg 46 extends from the lower end of the vertical base 44, at a position below the upper leg 48. As shown the bottom face of the panel 20 rests on the lower leg 46 when mounted and the upper leg encloses the upper face of the panel 20 in the vicinity of the longitudinal panel edges 22, 24. According to the embodiment shown both legs 46, 48 extend over an equal distance from the vertical base 44 in the direction of an adjacent longitudinal profile 40, however it is clear that alternative embodiments are possible. As further shown, these panel support structures 42 respectively enclose the longitudinal panel edges 22, 24 of the panel 20. Further these panel support structures 42 are designed in such a way that that the panels 20 can only be added to a row 30 by sliding the panels 20 along the longitudinal direction 36 with both opposing longitudinal panel edges 22, 24 respectively enclosed by the corresponding panel support structures 42 of the two longitudinal profiles 40 bordering said row 30. Preferably, as will be explained in more detail below, these panels 20 are preferably slid into the panel support structures 42 of two longitudinal profiles 40 bordering their row 30 from the lower end 32 of this row 30 and subsequently slid along the longitudinal direction 36 towards the higher end 34 of this row 30. It is clear that, in this way, the panels 20 are secured in between the bordering panel support structures 42 in such a way that panels 20 cannot be removed by means of pivoting or sliding along any other direction than the longitudinal direction 36. The distance between the lower leg 46 and the upper leg 48 corresponds to the thickness of the panel 20, preferably increased with a suitable clearance to allow for the sliding of the panel when enclosed by the panel support structures 42, for example, a clearance in the range of 2% to 20% of the panel thickness or 0,5mm to 3mm. The distance between the vertical bases 44 of the panel support structures 42 of two adjacent longitudinal profiles 40 corresponds to the length of the panel 20 along the transverse direction 38, preferably increased with a suitable clearance to allow for the sliding of the panel when enclosed by the panel support structures 42, for example, a clearance in the range of 0,5mm to 3mm. It is clear that, according to the embodiment shown, the distance between the corresponding legs 46, 48 of the facing panel support structures 42 of adjacent longitudinal profiles 40 is smaller than the length of the panel 20 along the transverse direction 38 when mounted. Preferable this distance is in the range of 5mm to 25mm smaller than this length of the panel 20 along the transverse direction 38. As further shown, it is clear that the distance between the vertical bases 44 of the respective facing panel support structures 42 of two adjacent longitudinal supports 40 is larger than the size of the panels 20 along the transverse direction 38 when mounted, however, as already explained above the distance is preferably increased sufficiently in order to provide a suitable clearance to support sliding of the panel 20 along the longitudinal direction 36, but small enough to prevent release from the panel support structures 42 by means of tilting or sliding of the panels along a direction different from the longitudinal direction 36. According to the embodiment shown, at the upper end of the longitudinal profile 40, both opposing panel support structures 42 are joined by means of a top cover 43.

As shown in Figure 5 the embodiment of the transverse profile 50 comprises a panel support structure 52, similar to the panel support structure 42 of the longitudinal profiles 40 described above. The panel support structure 52 of the transverse profile 50 similarly is arranged at each side facing an adjacent transverse profile 50. According to the embodiment shown, this thus similarly means that the transverse profile 50 comprises two opposing panel support structures 52 arranged at both sides of the plane of symmetry 51 of this mirror symmetrical embodiment of the transverse profile 50. It is clear that this plane of symmetry 51, as shown extends transverse to the longitudinal direction 36. Said panel support structure 52 comprises a U shaped cross section comprising a vertical base 54 and legs 56, 58 extending in the direction of an adjacent transverse profile 50. The base 54 and legs 56, 58 of the U-shaped cross are dimensioned similarly and function similarly with respect to supporting and enclosing the panel 20 in the vicinity of the transverse panel edges 26, 28, as described above with respect to the U shaped cross section of the panel support structure 42 of the longitudinal profile 40 and the longitudinal edges 22, 24 of the panel 20. According to the embodiment shown, at the upper end of the transverse profile 50, similarly both opposing panel support structures 52 are joined by means of a top cover 53.

As further shown, according to the embodiment of Figures 4 and 5, the longitudinal profile 40 further comprise a profile support structure 62 arranged below each panel support structure 42. Also, this profile support structure 62 comprises a U shaped cross section comprising a vertical base 64 and legs 66, 68 extending in the direction of an adjacent longitudinal profile 40. As further shown, these profile support structures 62 are dimensioned to enclose extensions 76, 78 at the ends of the transverse profile 50. As shown, the transverse profile 50 comprises these extensions 76, 78 which extends at both opposing ends 72, 74 of the transverse profile 50. It is clear that, opposing ends 72, 74 of the transverse profile 50, are the distal ends of the transverse profile 50 along the transverse direction 38 when mounted. These opposing ends 72, 74 are thus the ends of the transverse profile 50 facing the bordering longitudinal profiles 40 of the row 30 in which the transverse profile 50 is mounted. The extensions 76, 78 thus extend at their respective end 72, 74 generally along the transverse direction 38 in such a way that they are enclosed by the adjacent profile support structure 62 of the adjacent longitudinal profiles 40. In this way, it is clear that the transverse profiles 50 can be added to said row 30 by sliding together with said panels 20 along the longitudinal direction 36 during mounting. It is further clear that the extensions 76, 78 are arranged at a similar position below the panel support structure 52 of the transverse profile 50, similarly as the mating profile support structure 62 is arranged below the panel support structure 42 of the longitudinal profile 40. It is thus clear, as shown in Figures 4 and 5, that the length of the transverse profile 50 along the transverse direction 38, is larger at the height of the extensions 76, 78, then at the height of the panel support structures 52 of the transverse profile 50. It is further also clear that the length of the transverse profiles 50 along the transverse direction 38 at the height of the panel support structures 52 is smaller than the distance between the legs 46, 48 of the respective facing panel support structures 42 of the adjacent longitudinal profiles 40 in between which the transverse profiles 50 are mounted, he length of the transverse profiles 50 along the transverse direction 38 at the height of the extensions 76, 78 is larger than the distance between the legs 66, 68 of the respective facing profile support structures 62 of the adjacent longitudinal profiles 40 in between which the transverse profiles 50 are mounted.

As further shown, according to the embodiment of Figures 4 and 5, the longitudinal profile 40 further comprises bottom mounting legs 49 arranged at the lower end of the longitudinal profile below the profile support structures 62. Further, as shown the embodiment of the transverse profile 50 further comprises at its lower end a closed profile bottom 59 arranged to be supported on the lower leg 66 of the profile support structure 62 of the longitudinal profile 40 at the extensions 76, 78 of the transverse profile 50, when mounted.

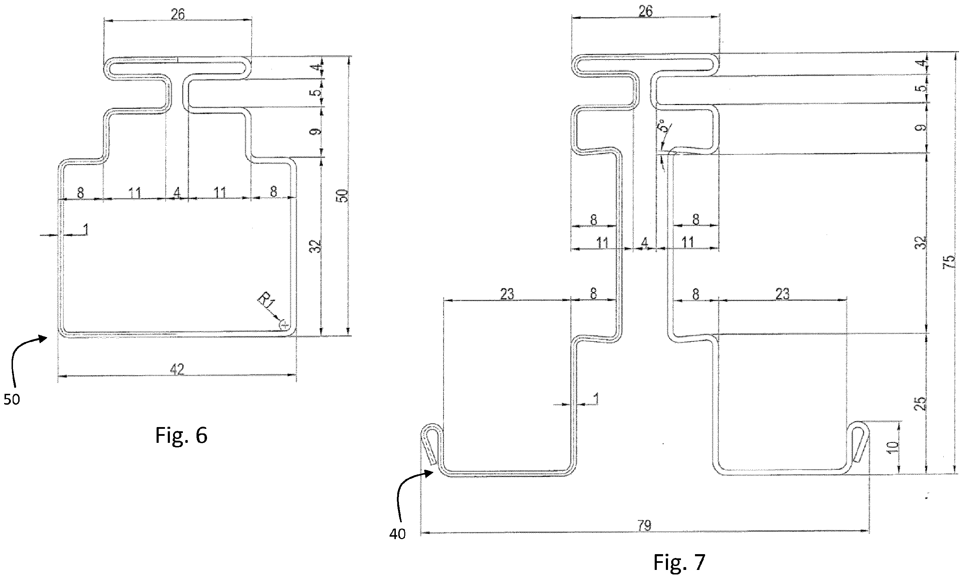

Figures 6 and 7 show dimensions of an exemplary embodiment of the longitudinal and transverse profiles of Figure 4 and 5. The dimensions shown in Figures 6 and 7 are expressed in mm. It is clear that, alternative embodiments are possible, in which for example the dimensions are suitably scaled, or in which the dimensions are suitable modified within a range of 50% to 200% of the dimensions shown. It is clear that, according to the embodiment shown in Figure 7, the legs 66, 68 of the profile support structure 60 are preferably inclined towards each other at an angle of 5°C as this improves the slidable mounting of the transverse profiles 50. It is however clear that alternative embodiments are possible, for example in which the angle of inclination is in the range of 2° to 20°.

According to the embodiments shown above, preferably the longitudinal profiles 40 and/or the transverse profiles 50 are profiles manufactured from a single sheet of metal. Preferably use can be made of a manufacturing process similar as described in WO2015/144601, which is incorporated herein by reference.

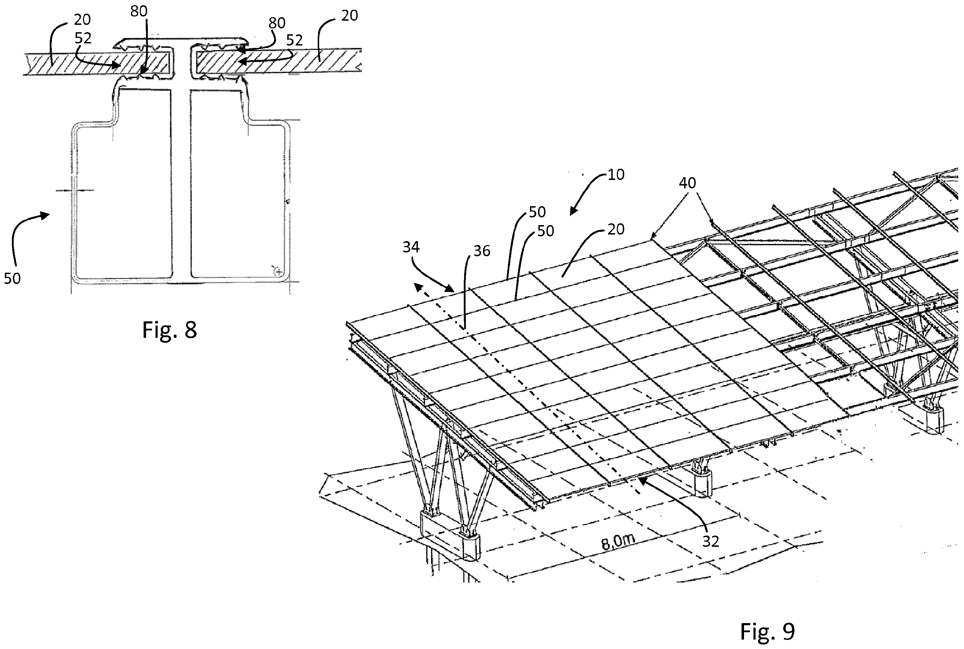

However, alternative embodiments are possible, such as for example embodiment shown in Figure 8, which shows a transverse profile 50 for use in the assembly described above which is embodied as a profile manufactured from plastic. Preferably, as shown, the transverse profile 50 further comprises an elastic element 80 arranged in its panel support 52. In this way, the risk of damage to fragile panels 20 during mounting is reduced and sealing against liquid intrusion is accomplished. Such an elastic element 80 could for example be a suitable gasket, a rubber element, a plastic element, etc. However according to a particularly advantageous embodiment, preferably the elastic element 80 is a rubber or plastic element co-extruded with the panel support 52 of the plastic transverse profile 50. It is clear that still further alternative embodiments are possible, such as for example embodiments in which the transverse profile 50 comprises an extruded profile from a suitable metal, such as for example Aluminium. Optionally such a transverse profile 50 could also be provided with a suitable elastic element 80, which is preferably co-extruded with the panel support 52 of the transverse profile 50 made of extruded metal, such as for example Aluminium.

Although, according to the embodiments described above the panels are a glass panel or a frame-less photo-voltaic panel, the assembly could also be useful for use with other types of photo-voltaic panels for example.

Further a kit of parts for use in an assembly as described above, comprising said longitudinal profiles 40 and said transverse profiles 50 is especially advantageous, especially when combined with frame-less solar panels, as the transport volume an weight associated with such a kit of parts is reduced considerably with respect to prior art systems.

A further advantageous embodiment of an assembly similar as shown in Figure 1 is shown in Figure 9. This embodiment of the assembly embodies a car port, car park covering, or similar assembly. Slidable, sequential insertion of all panels 20 and transverse profiles 50 of a row 30 at the lower end 32 is specifically advantageous in such application, as the lower end 32 is typically already at least 2,5m above ground level. As shown in Figure 9, such an assembly can comprise a relatively large number of panels 20 arranged along the longitudinal direction 36 in each of the plurality of adjacent rows 30. As a result thereof, and taking into account a suitable level of inclination along the longitudinal direction 36 the higher end 34 will be considerably higher above ground level and difficulties will increase for reaching the higher end 34 in a safe and efficient manner during mounting.

Further as, during alternating, sequential, slidable insertion of the transverse profiles 50 and the panels 20 at the lower end 32 of the row 30 the assembly is configured to allow a newly inserted transverse profile 50 and/or panel 20 at the lower end 32 to slide the previously inserted sequence of transverse profiles 50 and/or panels 20 freely along the longitudinal direction 36 in the direction of the higher end 34, there is no need for access to intermediate locations between the lower end 32 and the higher end during mounting of the transverse profiles 50 and panels 20 of a row 30. There is no need to secure any of the transverse profiles 50 at such intermediate locations, as, after insertion of the last transverse profile 50 at the lower end 32 of the row 30, it suffices to attach this last transverse profile 50 of the row 30 to the bordering longitudinal profiles 40 of the row 30 in order to secure the entire sequence of transverse profiles 50 and panels 20 of the row 30 without the need for further mounting means.

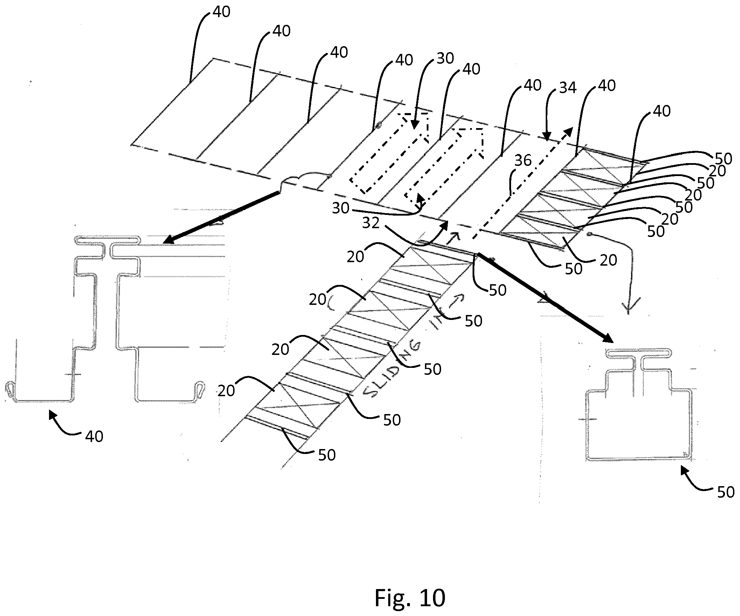

Such an embodiment of a method of mounting an assembly 10 as described above, has been further schematically illustrated by means of Figure 10. As shown, in general, after arranging the longitudinal profiles 40, for each of said rows 30 bordered by two of said longitudinal profiles 40, a first transverse profile 50 is inserted at the lower end 32. Subsequently a first panel (20) is inserting at the lower end 32, thereby sliding the first transverse profile 50 along the longitudinal direction towards the higher end 34. Then, alternatingly there are inserted newly inserted transverse profiles 50 and panels 20 at the lower end 32. During this process, the newly inserted transverse profiles 50 and panels 20 slide the previously inserted sequence of transverse profiles 50 and/or panels 20 freely along the longitudinal direction 36 in the direction of the higher end 34. After insertion of the last transverse profile 50 at the lower end 32 of the row 30, the entire sequence of transverse profiles 50 and panels 20 of the row 30 can be secured without the need for further mounting means by attaching this last transverse profile 50 of the row 30 to the bordering longitudinal profiles 40 of the row 30.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An assembly (10) adapted to support panels (20), arranged in a plurality of rows (30) arranged side by side,
said rows (30) each extending from a lower end (32) to a higher end (34) along a longitudinal direction (36) inclined with respect to a horizontal plane (H),
each row (30) comprising:
- two longitudinal profiles (40) extending from said lower end (32) to said higher end (34) along said longitudinal direction (36) and sideways bordering said row (30);
- a plurality of transverse profiles (50) extending between said two longitudinal profiles (40) along a transverse direction (38) transverse to said longitudinal direction (36),
- when mounted, a plurality of said panels (20), arranged sequentially along said longitudinal direction (36), and supported:
- between said two longitudinal profiles (40) at both opposing longitudinal panel edges (22, 24) extending along said longitudinal direction (36), and
- between two of said transverse profiles (50) at both opposing transverse panel edges (26, 28) extending along said transverse direction (38), and
wherein:
- said longitudinal profiles (40) comprise a panel support structure (42) at each side facing an adjacent longitudinal profile (40), said panel support structure (42) comprising a U shaped cross section comprising a vertical base (44) and legs (46, 48) extending in the direction of an adjacent longitudinal profile (40);
- said panel support structures (42) are configured such that said panels (20) can only be added to said row (30) by sliding said panels (20) along the longitudinal direction (36) with both opposing longitudinal panel edges (22, 24) respectively enclosed by the corresponding panel support structures (42) of the two longitudinal profiles (40) bordering said row (30); and
- said transverse profiles (50) comprise a panel support structure (52) at each side facing an adjacent transverse profile (50), said panel support structure (52) comprising a U-shaped cross section comprising a vertical base (54) and legs (56, 58) extending in the direction of an adjacent transverse profile (50);
**CHARACTERISED IN THAT**
- said longitudinal profiles (40) further comprise a profile support structure (62) arranged below each panel support structure (42), said profile support structure (62) comprising a U shaped cross section comprising a vertical base (64) and legs (66, 68) extending in the direction of an adjacent longitudinal profile (40); and
- said transverse profiles (50) comprise, extending at both opposing ends (72, 74), respective extensions (76, 78) configured to be respectively enclosed by said profile support structures (62) of said two adjacent longitudinal profiles (40) such that said transverse profiles (50) can be added to said row (30) by sliding together with said panels (20) along the longitudinal direction (36) during mounting.

2. An assembly according to claim 1, wherein said extensions (76, 78) of said transverse profiles (50) are arranged at a position below said panel support structures (52) of the transverse profiles (50), corresponding to the position of the profile support structures (62) below the panel support structures (42) of said longitudinal profiles (40).

3. An assembly according to claim 1 or 2, wherein each row (30) comprises:
- a plurality of said panels (20), arranged sequentially along said longitudinal direction (36), and supported:
- between said two longitudinal profiles (40) at both opposing longitudinal panel edges (22, 24) extending along said longitudinal direction (36), and
- between two of said transverse profiles (50) at both opposing transverse panel edges (26, 28) extending along said transverse direction (38), and
wherein:
- the distance between the corresponding legs (46, 48) of the respective facing panel support structures (42) of two adjacent longitudinal supports (40) is smaller than the size of the panels along the transverse direction (38) when mounted;
- the distance between the vertical bases (44) of the respective facing panel support structures (42) of two adjacent longitudinal supports (40) is larger than the size of the panels (20) along the transverse direction (38) when mounted;
- the distance between the corresponding legs (56, 58) of the respective facing panel support structures (52) of two adjacent transverse supports (50) is smaller than the size of the panels along the longitudinal direction (36) when mounted;
- the distance between the vertical bases (54) of the respective facing panel support structures (52) of two adjacent transverse supports (50) is larger than the size of the panels (20) along the longitudinal direction (36) when mounted;
- the length of the transverse profiles (50) along the transverse direction (38), is larger at the height of the extensions (76, 78), then at the height of the panel support structures (52) of the transverse profile (50);
- the length of the transverse profiles (50) along the transverse direction (38) at the height of the panel support structures (52) is smaller than the distance between the legs (46, 48) of the respective facing panel support structures (42) of the adjacent longitudinal profiles (40) in between which the transverse profiles (50) are mounted; and/or
- the length of the transverse profiles (50) along the transverse direction (38) at the height of the extensions (76, 78) is larger than the distance between the legs (66, 68) of the respective facing profile support structures (62) of the adjacent longitudinal profiles (40) in between which the transverse profiles (50) are mounted.

4. An assembly according to any of the preceding claims, wherein the legs (66, 68) of the profile support structure (60) are inclined towards each other at an angle in the range of 2° to 20°.

5. An assembly according to any of the preceding claims, wherein during alternating, sequential, slidable insertion of said transverse profiles (50) and said panels (20) at the lower end (32) of the row (30) the assembly is configured to allow a newly inserted transverse profile (50) and/or panel (20) at the lower end (32) to slide the previously inserted sequence of transverse profiles (50) and/or panels (20) freely along the longitudinal direction (36) in the direction of the higher end (34).

6. An assembly according to any of the preceding claims, wherein, after insertion of the last transverse profile (50) at the lower end (32) of the row (30), this last transverse profile (50) of the row (30) is attached to the bordering longitudinal profiles (40) of the row (30) such that the entire sequence of transverse profiles (50) and panels (20) of the row (30) is secured without the need for further mounting means.

7. An assembly according to any of the preceding claims, wherein the longitudinal profiles (40) and the transverse profiles (50) are profiles manufactured from a single sheet of metal.

8. An assembly according to any of the preceding claims, wherein the transverse profiles (50) comprises an elastic element (80) arranged in its panel support (52).

9. An assembly according to claim 8, wherein the elastic element (80) comprises one or more of the following:
- a gasket;
- a rubber element;
- a plastic element;
- a rubber or plastic element co-extruded with the panel support (52) of the transverse profile (50), when said transverse profile (50) is manufactured as one of the following:
- an extruded plastic profile;
- an extruded metal profile;
- an extruded Aluminium profile.

10. An assembly according to any of the preceding claims wherein:
- said longitudinal profiles (40) are mirror symmetric with respect to vertical plane of symmetry (41) along said longitudinal direction (36); and/or
- said transverse profiles (50) are mirror symmetric with respect to a plane of symmetry (51) transverse to said longitudinal direction (36).

11. An assembly according to any of the preceding claims, wherein each row (30) comprises:
- a plurality of said panels (20), arranged sequentially along said longitudinal direction (36), and supported:
- between said two longitudinal profiles (40) at both opposing longitudinal panel edges (22, 24) extending along said longitudinal direction (36), and
- between two of said transverse profiles (50) at both opposing transverse panel edges (26, 28) extending along said transverse direction (38), and
wherein said panel (20) consists of one of the following:
- a glass panel;
- a frame-less photo-voltaic panel;
- a photo-voltaic panel.

12. Method of mounting an assembly according to any of the claims 1 to 11, **characterized in that** the method comprises the steps of:
- arranging said longitudinal profiles (40);
- for each of said rows (30) bordered by two of said longitudinal profiles (40):
- inserting at said lower end (32) a first transverse profile (50);
- inserting at said lower end (32) a first panel (20) thereby sliding said first transverse profile (50) along the longitudinal direction towards the higer end (34);
- inserting alternatingly a newly inserted transverse profile (50) and a panel (20) at the lower end (32), thereby sliding the previously inserted sequence of transverse profiles (50) and/or panels (20) freely along the longitudinal direction (36) in the direction of the higher end (34).

13. Method according to claim 12, wherein, the method comprises the further steps of:
- after insertion of the last transverse profile (50) at the lower end (32) of the row (30), attaching this last transverse profile (50) of the row (30) to the bordering longitudinal profiles (40) of the row (30) such that the entire sequence of transverse profiles (50) and panels (20) of the row (30) is secured without the need for further mounting means.

## Patentansprüche

1. Anordnung (10), die dazu eingerichtet ist, Platten (20) zu unterstützen, die in mehreren nebeneinander angeordneten Reihen (30) angeordnet ist, wobei sich die Reihen (30) jeweils von einem unteren Ende (32) zu einem höheren Ende (34) entlang einer Längsrichtung (36) erstrecken, die in Bezug auf eine horizontale Ebene (H) geneigt ist, wobei jede Reihe (30) umfasst:
- zwei Längsprofile (40), die sich vom unteren Ende (32) zum höheren Ende (34) entlang der Längsrichtung (36) erstrecken und seitlich die Reihe (30) begrenzen;
- mehrere Querprofile (50), die sich zwischen den zwei Längsprofilen (40) entlang einer Querrichtung (38) quer zur Längsrichtung (36) erstrecken;
- wenn sie montiert sind, mehrere der Platten (20), die nacheinander entlang der Längsrichtung (36) angeordnet sind und die unterstützt werden:
- zwischen den zwei Längsprofilen (40) an beiden gegenüberliegenden längsgerichteten Plattenkanten (22, 24), die sich entlang der Längsrichtung (36) erstrecken, und
- zwischen zwei der Querprofile (50) an beiden gegenüberliegenden quergerichteten Plattenkanten (26, 28), die sich entlang der Querrichtung (38) erstrecken, und wobei:
- die Längsprofile (40) eine Plattenstützstruktur (42) an jeder Seite umfassen, die einem benachbarten Längsprofil (40) zugewandt ist, wobei die Plattenstützstruktur (42) einen U-förmigen Querschnitt umfasst, der eine vertikale Basis (44) und Schenkel (46, 48) umfasst, die sich in Richtung eines benachbarten Längsprofils (40) erstrecken;
- die Plattenstützstrukturen (42) so ausgestaltet sind, dass die Platten (20) nur zu der Reihe (30) hinzugefügt werden können, indem die Platten (20) entlang der Längsrichtung (36) mit beiden gegenüberliegenden längsgerichteten Plattenkanten (22, 24) geschoben werden, die jeweils von den entsprechenden Plattenstützstrukturen (42) der zwei Längsprofile (40) umschlossen werden, die die Reihe (30) begrenzen; und
- die Querprofile (50) eine Plattenstützstruktur (52) an jeder Seite umfassen, die einem benachbarten Querprofil (50) zugewandt ist, wobei die Plattenstützstruktur (52) einen U-förmigen Querschnitt umfasst, der eine vertikale Basis (54) und Schenkel (56, 58) umfasst, die sich in Richtung eines benachbarten Querprofils (50) erstrecken;
**DADURCH GEKENNZEICHNET, DASS**
- die Längsprofile (40) ferner eine Profilstützstruktur (62) umfassen, die unterhalb jeder Plattenstützstruktur (42) angeordnet ist, wobei die Profilstützstruktur (62) einen U-förmigen Querschnitt umfasst, der eine vertikale Basis (64) und Schenkel (66, 68) umfasst, sich in Richtung eines benachbarten Längsprofils (40) erstrecken; und
- die Querprofile (50) jeweilige, sich an beiden gegenüberliegenden Enden (72, 74) erstreckende Verlängerungen (76, 78) umfassen, die dazu ausgestaltet sind, jeweils von den Profilstützstrukturen (62) der zwei benachbarten Längsprofile (40) so umschlossen zu werden, dass die Querprofile (50) zu der Reihe (30) hinzugefügt werden können, indem sie zusammen mit den Platten (20) entlang der Längsrichtung (36) während der Montage geschoben werden.

2. Anordnung nach Anspruch 1, wobei die Verlängerungen (76, 78) der Querprofile (50) an einer Position unterhalb der Plattenstützstrukturen (52) der Querprofile (50) angeordnet sind, die der Position der Profilstützstrukturen (62) unterhalb der Plattenstützstrukturen (42) der Längsprofile (40) entspricht.

3. Anordnung nach Anspruch 1 oder 2, wobei jede Reihe (30) umfasst:
- mehrere der Platten (20), die nacheinander entlang der Längsrichtung (36) angeordnet sind und die unterstützt werden:
- zwischen den zwei Längsprofilen (40) an beiden gegenüberliegenden längsgerichteten Plattenkanten (22, 24), die sich entlang der Längsrichtung (36) erstrecken, und
- zwischen zwei der Querprofile (50) an beiden gegenüberliegenden quergerichteten Plattenkanten (26, 28), die sich entlang der Querrichtung (38) erstrecken, und wobei:
- der Abstand zwischen den entsprechenden Schenkeln (46, 48) der jeweiligen zugewandten Plattenstützstrukturen (42) von zwei benachbarten Längsträgern (40) kleiner als die Größe der Platten entlang der Querrichtung (38) ist, wenn sie montiert sind;
- der Abstand zwischen den vertikalen Basen (44) der jeweiligen zugewandten Plattenstützstrukturen (42) von zwei benachbarten Längsträgern (40) größer als die Größe der Platten (20) entlang der Querrichtung (38) ist, wenn sie montiert sind;
- der Abstand zwischen den entsprechenden Schenkeln (56, 58) der jeweiligen zugewandten Plattenstützstrukturen (52) von zwei benachbarten Querträgern (50) kleiner als die Größe der Platten entlang der Längsrichtung (36) ist, wenn sie montiert sind;
- der Abstand zwischen den vertikalen Basen (54) der jeweiligen zugewandten Plattenstützstrukturen (52) von zwei benachbarten Längsträgern (50) größer als die Größe der Platten (20) entlang der Längsrichtung (36) ist, wenn sie montiert sind;
- die Länge der Querprofile (50) entlang der Querrichtung (38) ist größer auf der Höhe der Verlängerungen (76, 78), danach auf der Höhe der Plattenstützstrukturen (52) des Querprofils (50);
- die Länge der Querprofile (50) entlang der Querrichtung (38) auf der Höhe der Plattenstützstrukturen (52) ist kleiner als der Abstand zwischen den Schenkeln (46, 48) der jeweiligen zugewandten Plattenstützstrukturen (42) der benachbarten Längsprofile (40), zwischen denen die Querprofile (50) montiert sind; und/oder
- die Länge der Querprofile (50) entlang der Querrichtung (38) auf der Höhe der Verlängerungen (76, 78) ist größer als der Abstand zwischen den Schenkeln (66, 68) der jeweiligen zugewandten Profilstützstrukturen (62) der benachbarten Längsprofile (40), zwischen denen die Querprofile (50) montiert sind.

4. Anordnung nach einem der vorhergehenden Ansprüche, wobei die Schenkel (66, 68) der Profilstützstruktur (60) in einem Winkel im Bereich von 2° bis 20° zueinander geneigt sind.

5. Anordnung nach einem der vorhergehenden Ansprüche, wobei während des abwechselnden, aufeinanderfolgenden, verschiebbaren Einführens der Querprofile (50) und der Platten (20) am unteren Ende (32) der Reihe (30) die Anordnung dazu ausgestaltet ist, zu ermöglichen, dass ein neu eingeführtes Querprofil (50) und/oder eine neu eingeführte Platte (20) am unteren Ende (32) die zuvor eingeführte Folge von Querprofilen (50) und/oder Platten (20) frei entlang der Längsrichtung (36) in der Richtung des höheren Endes (34) gleitet.

6. Anordnung nach einem der vorhergehenden Ansprüche, wobei nach dem Einführen des letzten Querprofils (50) am unteren Ende (32) der Reihe (30) dieses letzte Querprofil (50) der Reihe (30) an den begrenzenden Längsprofilen (40) der Reihe (30) so angebracht ist, dass die gesamte Folge von Querprofilen (50) und Platten (20) der Reihe (30) gesichert ist, ohne dass weitere Befestigungsmittel erforderlich sind.

7. Anordnung nach einem der vorhergehenden Ansprüche, wobei die Längsprofile (40) und die Querprofile (50) Profile sind, die aus einem einzelnen Blech hergestellt sind.

8. Anordnung nach einem der vorhergehenden Ansprüche, wobei die Querprofile (50) ein elastisches Element (80) umfassen, das in seiner Plattenunterstützung (52) angeordnet ist.

9. Anordnung nach Anspruch 8, wobei das elastische Element (80) eines oder mehrere der folgenden umfasst:
- eine Dichtung;
- ein Gummielement;
- ein Kunststoffelement;
- ein Gummi- oder Kunststoffelement, das zusammen mit der Plattenunterstützung (52) des Querprofils (50) extrudiert wird, wenn das Querprofil (50) als eines der folgenden hergestellt wird:
- ein extrudiertes Kunststoffprofil;
- ein extrudiertes Metallprofil;
- ein extrudiertes Aluminiumprofil.

10. Anordnung nach einem der vorhergehenden Ansprüche, wobei:
- die Längsprofile (40) spiegelsymmetrisch in Bezug auf die vertikale Symmetrieebene (41) entlang der Längsrichtung (36) sind; und/oder
- die Querprofile (50) spiegelsymmetrisch in Bezug auf eine Symmetrieebene (51) quer zur Längsrichtung (36) sind.

11. Anordnung nach einem der vorhergehenden Ansprüche, wobei jede Reihe (30) umfasst:
- mehrere der Platten (20), die nacheinander entlang der Längsrichtung (36) angeordnet sind und die unterstützt werden:
- zwischen den zwei Längsprofilen (40) an beiden gegenüberliegenden längsgerichteten Plattenkanten (22, 24), die sich entlang der Längsrichtung (36) erstrecken, und
- zwischen zwei der Querprofile (50) an beiden gegenüberliegenden quergerichteten Plattenkanten (26, 28), die sich entlang der Querrichtung (38) erstrecken, und wobei die Platte (20) aus einem der folgenden besteht:
- eine Glasplatte;
- ein rahmenloses Photovoltaikmodul;
- ein Photovoltaikmodul.

12. Verfahren zum Montieren einer Anordnung nach einem der Ansprüche 1 bis 11, **dadurch gekennzeichnet, dass** das Verfahren die folgenden Schritte umfasst:
- Anordnen der Längsprofile (40);
- für jede der Reihen (30), die von zwei der Längsprofile (40) begrenzt sind:
- Einführen eines ersten Querprofils (50) an dem unteren Ende (32);
- Einführen einer ersten Platte (20) an dem unteren Ende (32), wodurch das erste Querprofil (50) entlang der Längsrichtung in Richtung des höheren Endes (34) geschoben wird;
- abwechselnd ein neu eingeführtes Querprofil (50) und eine Platte (20) am unteren Ende (32) einführen, wodurch die zuvor eingeführte Folge von Querprofilen (50) und/oder Platten (20) frei entlang der Längsrichtung (36) in der Richtung des höheren Endes (34) geschoben wird.

13. Verfahren nach Anspruch 12, wobei das Verfahren die weiteren folgenden Schritte umfasst:
- nach dem Einführen des letzten Querprofils (50) am unteren Ende (32) der Reihe (30), Anbringen dieses letzten Querprofils (50) der Reihe (30) an den begrenzenden Längsprofilen (40) der Reihe (30) derart, dass die gesamte Folge von Querprofilen (50) und Platten (20) der Reihe (30) gesichert ist, ohne dass weitere Befestigungsmittel erforderlich sind.

## Revendications

1. Ensemble (10) adapté pour supporter des panneaux (20), agencés en une pluralité de rangées (30) agencées côte à côte, lesdites rangées (30) s'étendant chacune depuis une extrémité inférieure (32) jusqu'à une extrémité supérieure (34) le long d'une direction longitudinale (36) inclinée par rapport à un plan horizontal (H), chaque rangée (30) comprenant :
- deux profils longitudinaux (40) s'étendant depuis ladite extrémité inférieure (32) jusqu'à ladite extrémité supérieure (34) le long de ladite direction longitudinale (36) et bordant sur le côté ladite rangée (30) ;
- une pluralité de profils transversaux (50) s'étendant entre lesdits deux profils longitudinaux (40) le long d'une direction transversale (38) transversale à ladite direction longitudinale (36),
- quand ils sont montés, une pluralité desdits panneaux (20), agencés de manière séquentielle le long de ladite direction longitudinale (36), et supportés :
- entre lesdits deux profils longitudinaux (40) au niveau des deux bords de panneau longitudinaux se faisant face (22, 24) s'étendant le long de ladite direction longitudinale (36), et
- entre deux desdits profils transversaux (50) au niveau des deux bords de panneau transversaux se faisant face (26, 28) s'étendant le long de ladite direction transversale (38), et dans lequel :
- lesdits profils longitudinaux (40) comprennent une structure de support de panneau (42) au niveau de chaque côté regardant un profil longitudinal adjacent (40), ladite structure de support de panneau (42) comprenant une section transversale en forme de U comprenant une base verticale (44) et des pattes (46, 48) s'étendant dans la direction d'un profil longitudinal adjacent (40) ;
- lesdites structures de support de panneau (42) sont configurées de manière à ce que lesdits panneaux (20) puissent uniquement être ajoutés à ladite rangée (30) en glissant lesdits panneaux (20) le long de la direction longitudinale (36) avec les deux bords de panneau longitudinaux se faisant face (22, 24) respectivement enserrés par les structures de support de panneau correspondantes (42) des deux profils longitudinaux (40) bordant ladite rangée (30) ; et
- lesdits profils transversaux (50) comprennent une structure de support de panneau (52) au niveau de chaque côté regardant un profil transversal adjacent (50), ladite structure de support de panneau (52) comprenant une section transversale en forme de U comprenant une base verticale (54) et des pattes (56, 58) s'étendant dans la direction d'un profil transversal adjacent (50) ;
**CARACTÉRISÉ EN CE QUE**
- lesdits profils longitudinaux (40) comprennent en outre une structure de support de profil (62) agencée sous chaque structure de support de panneau (42), ladite structure de support de profil (62) comprenant une section transversale en forme de U comprenant une base verticale (64) et des pattes (66, 68) s'étendant dans la direction d'un profil longitudinal adjacent (40) ; et
- lesdits profils transversaux (50) comprennent, s'étendant au niveau des deux extrémités opposées (72, 74), des extensions respectives (76, 78) configurées pour être respectivement enserrées par lesdites structures de support de profil (62) desdits deux profils longitudinaux adjacents (40) de manière à ce que lesdits profils transversaux (50) puissent être ajoutés à ladite rangée (30) en glissant ensemble avec lesdits panneaux (20) le long de la direction longitudinale (36) pendant le montage.

2. Ensemble selon la revendication 1, dans lequel lesdites extensions (76, 78) desdits profils transversaux (50) sont agencés au niveau d'une position sous lesdites structures de support de panneau (52) desdits profils transversaux (50), correspondant à la position des structures de support de profil (62) sous les structures de support de panneau (42) desdits profils longitudinaux (40).

3. Ensemble selon la revendication 1 ou 2, dans lequel chaque rangée (30) comprend :
- une pluralité desdits panneaux (20), agencés de manière séquentielle le long de ladite direction longitudinale (36), et supportés :
- entre lesdits deux profils longitudinaux (40) au niveau des deux bords de panneau longitudinaux se faisant face (22, 24) s'étendant le long de ladite direction longitudinale (36), et
- entre deux desdits profils transversaux (50) au niveau des deux bords de panneau transversaux se faisant face (26, 28) s'étendant le long de ladite direction transversale (38), et dans lequel :
- la distance entre les pattes correspondantes (46, 48) des structures de support de panneau se regardant respectives (42) de deux supports longitudinaux adjacents (40) est plus petite que la taille des panneaux le long de la direction transversale (38) lorsqu'ils sont montés ;
- la distance entre les bases verticales (44) des structures de support de panneau se regardant respectives (42) de deux supports longitudinaux adjacents (40) est plus grande que la taille des panneaux (20) le long de la direction transversale (38) lorsqu'ils sont montés ;
- la distance entre les pattes correspondantes (56, 58) des structures de support de panneau se regardant respectives (52) de deux supports transversaux adjacents (50) est plus petite que la taille des panneaux le long de la direction longitudinale (36) lorsqu'ils sont montés ;
- la distance entre les bases verticales (54) des structures de support de panneau se regardant respectives (52) de deux supports transversaux adjacents (50) est plus grande que la taille des panneaux (20) le long de la direction longitudinale (36) lorsqu'ils sont montés ;
- la longueur des profils transversaux (50) le long de la direction transversale (38), est plus grande au niveau de la hauteur des extensions (76, 78), qu'au niveau de la hauteur des structures de support de panneau (52) du profil transversal (50) ;
- la longueur des profils transversaux (50) le long de la direction transversale (38) au niveau de la hauteur des structures de support de panneau (52) est plus petite que la distance entre les pattes (46, 48) des structures de support de panneau se regardant respectives (42) des profils longitudinaux adjacents (40) entre lesquels les profils transversaux (50) sont montés ; et/ou
- la longueur des profils transversaux (50) le long de la direction transversale (38) au niveau de la hauteur des extensions (76, 78) est plus grande que la distance entre les pattes (66, 68) des structures de support de profil se regardant respectives (62) des profils longitudinaux adjacents (40) entre lesquels les profils transversaux (50) sont montés.

4. Ensemble selon l'une quelconque des revendications précédentes, dans lequel les pattes (66, 68) de la structure de support de profil (60) sont inclinées les unes vers les autres à un angle dans la plage de 2° à 20°.

5. Ensemble selon l'une quelconque des revendications précédentes, dans lequel pendant l'insertion alternative, séquentielle, coulissante desdits profils transversaux (50) et desdits panneaux (20) au niveau de l'extrémité inférieure (32) de la rangée (30), l'ensemble est configuré pour permettre un profil transversal (50) et/ou panneau (20) nouvellement inséré au niveau de l'extrémité inférieure (32) de glisser la séquence préalablement insérée de profils transversaux (50) et/ou panneaux (20) librement le long de la direction longitudinale (36) dans la direction de l'extrémité supérieure (34).

6. Ensemble selon l'une quelconque des revendications précédentes, dans lequel, après insertion du dernier profil transversal (50) au niveau de l'extrémité inférieure (32) de la rangée (30), ce dernier profil transversal (50) de la rangée (30) est attaché aux profils longitudinaux en bordure (40) de la rangée (30) de manière à ce que la séquence complète de profils transversaux (50) et panneaux (20) de la rangée (30) soit fixée sans nécessiter de moyen de montage supplémentaire.

7. Ensemble selon l'une quelconque des revendications précédentes, dans lequel les profils longitudinaux (40) et les profils transversaux (50) sont des profils fabriqués à partir d'une feuille unique de métal.

8. Ensemble selon l'une quelconque des revendications précédentes, dans lequel les profils transversaux (50) comprennent un élément élastique (80) agencé dans son support de panneau (52).

9. Ensemble selon la revendication 8, dans lequel l'élément élastique (80) comprend un ou plusieurs des éléments suivants :
- un joint d'étanchéité ;
- un élément caoutchouc ;
- un élément plastique ;
- un élément caoutchouc ou plastique co-extrudé avec le support de panneau (52) du profil transversal (50), quand ledit profil transversal (50) est fabriqué comme l'un des éléments suivants :
- un profil plastique extrudé ;
- un profil métallique extrudé ;
- un profil aluminium extrudé.

10. Ensemble selon l'une quelconque des revendications précédentes, dans lequel :
- lesdits profils longitudinaux (40) sont en symétrie miroir par rapport à un plan de symétrie vertical (41) le long de ladite direction longitudinale (36) ; et/ou
- lesdits profils transversaux (50) sont en symétrie miroir par rapport à un plan de symétrie (51) transversal à ladite direction longitudinale (36).

11. Ensemble selon l'une quelconque des revendications précédentes, dans lequel chaque rangée (30) comprend :
- une pluralité desdits panneaux (20), agencés de manière séquentielle le long de ladite direction longitudinale (36), et supportés :
- entre lesdits deux profils longitudinaux (40) au niveau des deux bords de panneau longitudinaux se faisant face (22, 24) s'étendant le long de ladite direction longitudinale (36), et
- entre deux desdits profils transversaux (50) au niveau des deux bords de panneau transversaux se faisant face (26, 28) s'étendant le long de ladite direction transversale (38), et dans lequel ledit panneau (20) est constitué de l'un des éléments suivants :
- un panneau de verre ;
- un panneau photovoltaïque sans cadre ;
- un panneau photovoltaïque.

12. Procédé de montage d'un ensemble selon l'une quelconque des revendications 1 à 11, **caractérisé en ce que** le procédé comprend les étapes de :
- agencement desdits profils longitudinaux (40) ;
- pour chacune desdites rangées (30) bordées par deux desdits profils longitudinaux (40) :
- insertion au niveau de ladite extrémité inférieure (32) d'un premier profil transversal (50) ;
- insertion au niveau de ladite extrémité inférieure (32) d'un premier panneau (20) glissant de la sorte ledit premier profil transversal (50) le long de la direction longitudinale vers l'extrémité supérieure (34) ;
- insertion en alternance d'un profil transversal (50) et un panneau (20) nouvellement inséré au niveau de l'extrémité inférieure (32), glissant de la sorte la séquence préalablement insérée de profils transversaux (50) et/ou panneaux (20) librement le long de la direction longitudinale (36) dans la direction de l'extrémité supérieure (34).

13. Procédé selon la revendication 12, dans lequel le procédé comprend en outre les étapes supplémentaires de :
- après insertion du dernier profil transversal (50) au niveau de l'extrémité inférieure (32) de la rangée (30), attache de ce dernier profil transversal (50) de la rangée (30) aux profils longitudinaux en bordure (40) de la rangée (30) de manière à ce que la séquence complète de profils transversaux (50) et panneaux (20) de la rangée (30) soit fixée sans nécessiter de moyen de montage supplémentaire.
